# FASCICULE DE BREVET EUROPEEN

(11) **EP 0 933 068 B1**
(45) Date de publication et mention de la délivrance du brevet: **09.10.2002**
(21) Numéro de dépôt: 99870016.5
(22) Date de dépôt: 01.02.1999
(51) Int. Cl.: A61D 13/00, G01K 13/00

(54) **Appareil et son utilisation pour la mesure, l'enregistrement et la surveillance de la température chez les mammifères**
Gerät und Verwendung zur Messung, Aufzeichnung und Überwachung der Temperatur von Säugetieren
Device and use for measuring, recording and monitoring of the temperature of mammals

(30) Priorité: 02.02.1998 BE 9800068
(43) Date de publication de la demande: 04.08.1999
(73) Titulaire: Verdroncken, Frans, 2520 Oelegem (BE)
(72) Inventeur: Verdroncken, Frans, 2520 Oelegem (BE)

(56) Documents cités:
- EP-A- 0 040 077
- EP-A- 0 068 262
- EP-A- 0 166 069
- DE-C- 111 151
- US-A- 4 487 208

## Description

L'invention concerne un appareil et son utilisation pour mesurer automatiquement à des intervalles réguliers la température corporelle chez les ongulés domestiques et à communiquer ces données à un moyen enrégistrant tel que imprimante ou ordinateur. En combinaison avec un ordinateur le système permet de déterminer automatiquement la déviation de la température, heure par heure, par rapport aux jours précédents. L'ordinateur peut en outre mettre en marche un signal d'alarme lorsque la température dépasse certaines limites.

Le mesurage à intervalles fixes et l'enregistrement de la température est très utile pour suivre le déroulement de certains processus physiologiques tels que les parturitions, les chaleurs, ou certaines maladies comme par exemple les mammites ou les pneumonies.

La difficulté pour mesurer la température automatiquement à intervalles fixes réside en premier lieu dans l'application d'une sonde de mesurage qui peut être installée sur l'ongulé en permanence pendant plusieures semaines, sans provoquer de lésions ou d'incommodités à celui-ci et en garantissant pendant toute la période un mesurage précis à un ou deux dixièmes de degrés Celsius près. Différents systèmes pour mesurer la température sont connus. Un système pour mesurer la température extérieurement est décrit à titre documentaire dans WO 87/01573 (s.a. Agritronics). Une sonde est appliquée sur la peau de l'animal. Cette méthode a l'inconvénient que la précision du mesurage dépend trop de l'isolation de la sonde. Une bonne isolation est difficile à réaliser. La variation de la température ambiante peut influencer le mesurage ce qui rend le système trop peu précis pour faire des conclusions valables. De ce fait l'appareil est peu utilisable pour suivre les processus physiologiques considérés ici.

D'autres mesurent la température intérieurement. Des systèmes de fixation d'une sonde dans le vagin sont décrits dans plusieurs brevets concernant des méthodes pour détecter la parturition.

Le brevet US 3583389 (D.G.Harvey) et le DE Auslegeschrift 2115162(NDCH and Co.) décrivent une sonde de forme ovoïde. D'autres ont essayé d'améliorer l'ancrage dans le vagin. Dans DE Offenlegunsschrift 2618368 (Stern-Elektronik), BE 892016(C. Dalemans) et FR 2413875(L. Marchand) sont décrites des sondes pourvues de lamelles ou collerettes en matière souple pour résoudre ce problème. Le brevet US 4651137 (D. Zartman) est basé sur un corps expansible et suivant les brevets FR 2436557(L. Marchand) et 2565097(R. Marchand) on utilise un ressort monté extérieurement.

Ces systèmes ont tous l'inconvénient qu'ils sont encombrants si on veut obtenir un ancrage suffisant pour éviter les expulsions accidentelles. Ceci conduit à un placement difficile et à des incommodités pour l'animal.

Le brevet EP A1 0068262 (Rheintechnik) décrit un système pour mesurer la température pour détecter quand les animaux viennent en chaleur. La sonde placée dans le vagin est pourvue d'un épaississement par exemple en forme de boule. Les dimensions de cet épaississement ne sont pas indiquées mais il est apparu qu'une sonde avec une boule d'un diamètre de sept cm, placée sur une vache, ce qui représente déjà une importante incommodité pour l'animal, est régulièrement expulsée. Le brevet mentionne uniquement comme application la détection des chaleurs et ne donne pas d'exemples.

Dans BE 1007090A6 (F.Verdroncken) on d'écrit l'usage d'une sonde avec un corps en forme tronconique. La rétention dans le vagin est obtenue par un ou plusieurs liens élastiques qui sont attachés aux flancs de l'animal à une ceinture. Bien que la sonde soit suffisamment retenue dans le vagin, un inconvénient réside dans le fait que la sonde est encombrante et que les différentes connections pour les fils électrique et les élastiques, sont encrassées après quelques jours par des matières fécales, ce qui nécessite des nettoyages fréquents

La présente invention contient une combinaison de sonde et de système de fixation qui vont à l'encontre de ces inconvénients.

Le fait que l'application du système ne repose pas sur l'éjection de la sonde mais sur le mesurage de la température, permet une exécution peu encombrante et une fixation simple. La sonde peut être en forme de tube mince, provoquant un minimum de gêne à l'animal. Le fil électrique qui sort de la sonde pour transmettre les mesures est utilisé lui-même pour obtenir la fixation. La souillure par les matières fécales est en même temps très réduite ce qui élimine la nécessité de nettoyages fréquents.

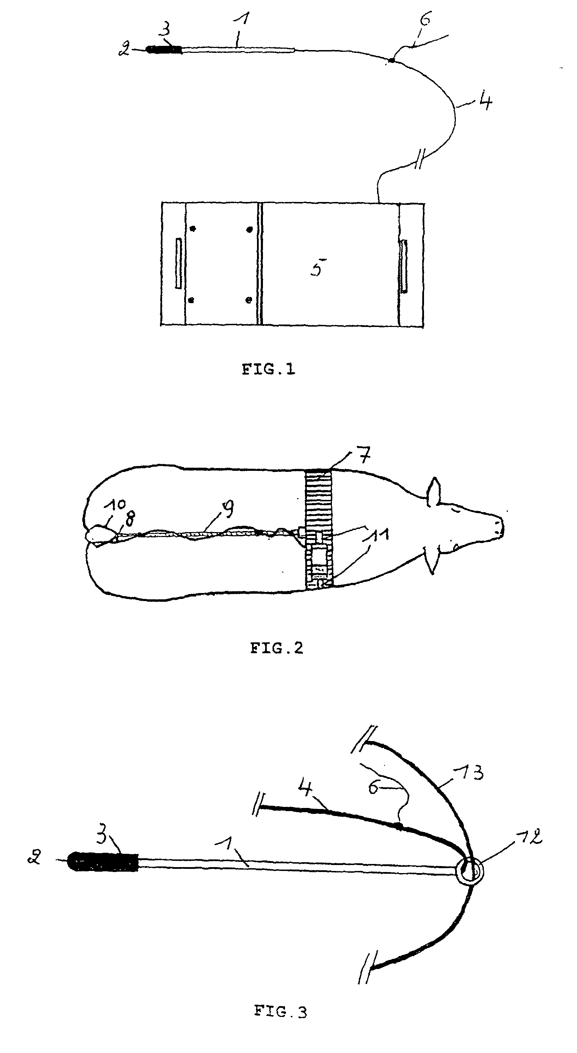

La sonde est représentée sur la figure 1. Elle est constituée d'un tube rigide (1) en métal ou en matière synthétique d'une longueur appropriée à la taille de l'animal à surveiller. Le diamètre est minimal, déterminé par le diamètre du fil électrique(4) qui passe à l'intérieur du tube. Un tenseur (2) pour mesurer la température est logé dans une douille (3) à l'extrémité du tube. Cette bulbe est executée de préférence en matière isolante par exemple en matière synthétique comme le PTFE, inaltérable et inoffensif par rapport au milieu vaginal. Le fil électrique(4) d'une longueur appropriée à la taille de l'animal relie la sonde à un boîtier(5) attaché sur l'animal et qui contient une batterie et les circuits électroniques nécessaires pour digitaliser les mesurages et les communiquer à des intervalles réguliers, par exemple toutes les cinq minutes, à un émetteur radio. Dans les publications spécialisées on trouve des descriptions pour réaliser ces circuits électroniques. Le système sonde et boîtier forment un ensemble qui est rendu parfaitement étanche par des joints et des scellements appropriés.

La sonde est placée dans le vagin sur toute sa longueur. Le placement dans le rectum est également possible. La fixation de la sonde dans par exemple le vagin est réalisée à l'aide d'une ficelle(6) attachée au cable électrique à environ 20 cm de distance du tube. A cet effet une sangle(7) (figure 2) est appliquée au garot de l'animal. La sangle est reliée à un anneau en matière souple qui est passé autour de la queue, par un lien(9) en textile ou en cuir qui court le long de la colonne vertebrale. Le cable est fixé en attachant la ficelle(6) à l'extrémité(8) de ce lien.

La sangle(7) est aussi équipée de fixations(11) nécessaires pour attacher le boîtier(5) avec l'électronique. A l'installation du système sur l'animal le fil électrique est enroulé quelques fois autour du lien(9) pour qu'il ne pende pas sur les côtés de l'animal.

Pour certaines espèces comme par exemple les chevaux, il est apparu qu'il doivent parfois s'accoutumer à la sonde. Pour éviter que celle-ci soit ejectée les deux ou trois premiers jours on emploie avantageusement une sonde comme représentée dans la figure 3. Elle est pourvue d'un anneau(12) par lequel il faut passer un lien(13), par exemple une corde, qui longe les deux côtés de l'animal et qui est attaché à la sangle (7). Le lien (13) peut coulisser dans l'anneau(12) et peut suivre ainsi les mouvements de l'animal sans exercer une traction sur la sonde. Après quelques jours on peut enlever le lien et travailler uniquement avec la fixation du fil électrique(4) à l'extrémité(8) du lion (9). Les données digitalisées émises par l'émetteur peuvent être captées par un récepteur qui est relié à un écran, une imprimante ou un ordinateur. L'accouplement de ce recepteur à un ordinateur offre d'excellents moyens pour une présentation nette des résultats du fait que les calculs de moyennes et de différences des données sont possibles automatiquement. En plus l'ordinateur peut avertir le responsable bien à temps par une alarme dès qu'une situation anormale est détectée par une valeur inhabituelle de la température mesurée.

Les possibilités de contrôler les animaux ont avantageusement augmentées par le système présenté. Il permet une mesure très précise de la température du fait que la sonde est placée à un endroit assez profond dans le vagin. La sonde y est parfaitement ancrée et peut rester en place pendant plusieures semaines sans être expulsée accidentellement et sans causer aucune gêne à l'animal.

### EXEMPLE 1.

### Prédiction de la parturition. (Tableau 1-a et 1-b)

Le fait que la température corporelle d'une vache marque une nette baisse de 0,7°C environ, pendant plus ou moins 24 heures avant la parturition, est connu dans le monde des éleveurs et à été décrit dans les publications spécialisées.

Une sonde d'une longueur de 26cm a été réalisée suivant la figure 1 avec un tube en acier inoxydable d'un diamètre de 7 mm. La bulbe qui contient l'élément électronique pour mesurer la température est en PTFE. Le cable électrique a une longueur de 1,65m et est pourvu à 20 cm de distance de la sonde d'une ficelle qui est attachée à l'extrémité(8) du lien(9) qui relie la sangle à un anneau en caoutchouc autour de la queue. Le système a été installée suivant la méthode décrite sur une vache en fin de gestation . La sonde était placée dans le vagin. Une transmission de la température était réalisée automatiquement toutes les cinq minutes.

La sonde est restée en place pendant 14 jours, jusqu'au moment du vêlage, sans qu'elle n'ait été expulsée accidentellement. Les mesurages étaient captées sur le disque dur d'un ordinateur qui était pourvu d'un programme qui donne un aperçu sur l'écran des résultats des sept derniers jours.

Le tableau 1-a montre dans la première colonne les heures et dans les suivantes, heure par heure, la médiane des températures enregistrées pendant cette heure pour les sept derniers jours.

Le tableau 1-b montre les différences des températures médianes avec la moyenne des températures médianes des sept derniers jours, toujours à la même heure.

Ces tableaux, surtout le tableau 1-b, permettent de prédire en un clin d'oeil que la parturition est proche, la température étant nettement plus basse par rapport aux jours précédents, et cela pendant trente heures environ. La vache a vêlé entre 18 et 19h, environ 30 heures après le commencement de la baisse de la température.

### EXEMPLE 2.

### Prédiction de la parturition avec complication de mammite. (Tableau 2-a et 2-b)

La même sonde a été installée sur une autre vache. Cinq jours avant la mise bas, une élévation considérable de la température s'est manifestée. Le responsable a été averti immédiatement par une alarme émise par l'ordinateur lorsque la température dépassait 40.3°C. On a constaté une mammite dans un des quartiers de la vache et a pu prendre à temps les mesures nécessaires pour soigner l'animal. Après huit heures la température est redevenue normale et la vache a vêlé cinq jours après. La parturition était parfaitement signalée par une baisse de la température pendant 27 heures. Le pis ne présentait aucune lésion grâce à la rapidité avec laquelle le responsable a pu intervenir.

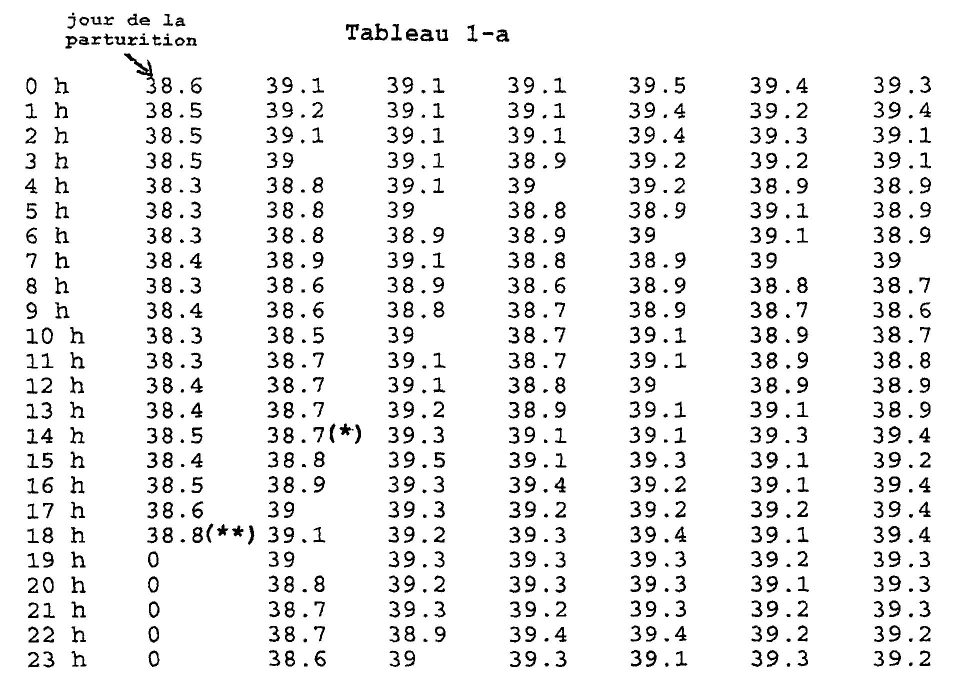

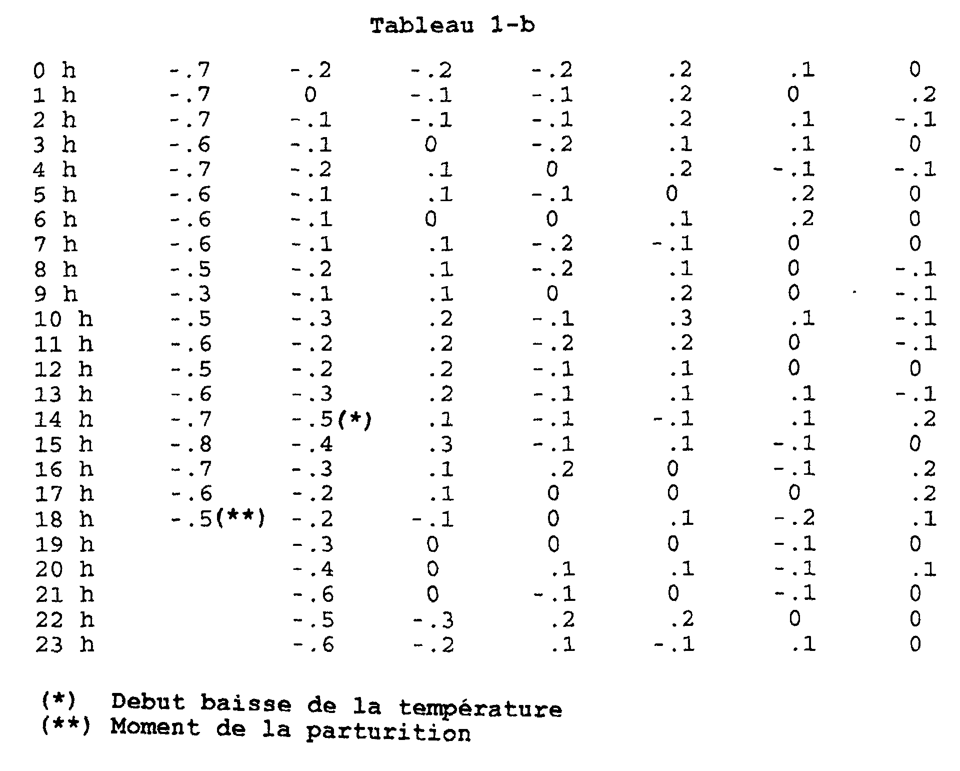

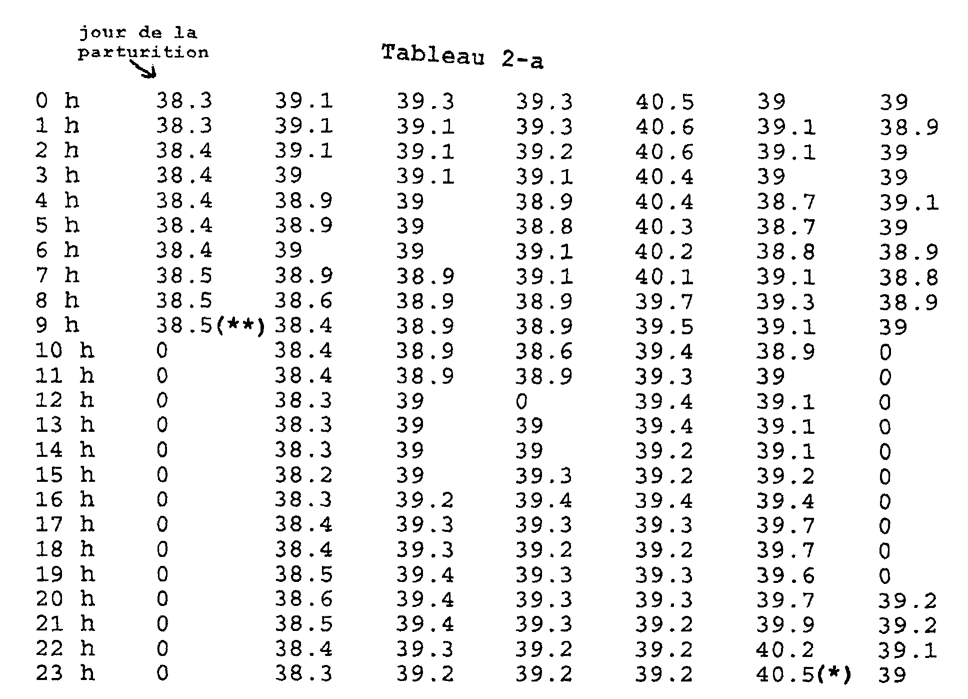

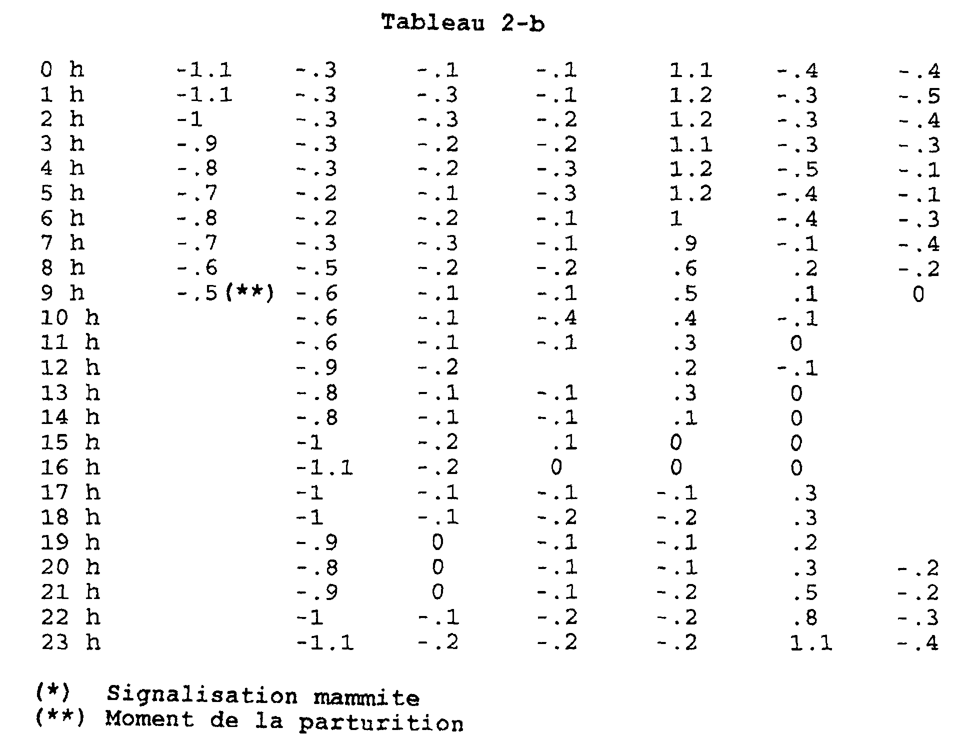

## Revendications

1. Un appareil pour détecter la température corporelle chez les ongulés domestiqués qui contient une sonde, qui peut être placée dans le vagin ou le rectum de l'ongulé, constituée d'un tube rigide (1) avec un diamètre minimal déterminé par le diamètre du fil électrique (4) qui passe à l'intérieur du tube, et équipé d'une douille (3) à une de ses extrémités dans laquelle est logé un senseur pour mesurer la température (2) qui est connecté au fil électrique (4), **caractérisé en ce que** la sonde a une longueur appropriée à la taille de l'animal et que le fil électrique est pourvu d'une ficelle (6) attaché à la partie sortante du tube.

2. Modification de l'appareil selon la revendication 1 en ce que le tube (1) de la sonde comporte un anneau (12) **caractérisé en ce que** un lien (13) est passé à travers cet anneau et que ce lien (13) est pour être attaché à une sangle (7) posée sur l'ongulé.

3. Système **caractérisé en ce que** un appareil pour détecter la température selon les revendications 1 ou 2 est relié par le fil électrique (4) à un boîtier (5), rendu étanche par des joints et des scellements, qui contient une batterie et les circuits électroniques nécessaires pour digitaliser les mesurages et un émetteur radio qui communique les mesurages à des intervalles réguliers à un récepteur.

4. Système selon la revendication 3 **caractérisé en ce que** le récepteur est relié à un écran ou à une imprimante.

5. Système selon la revendication 3 **caractérisé en ce que** le récepteur est relié à un ordinateur.

6. Système selon les revendications 3 à 5 **caractérisé en ce que** l'appareil auquel le récepteur est relié émet un signal acoustique et/ou visuel lorsque la température dépasse une valeur minimale ou maximale déterminée.

7. Système selon les revendications 3 et 5 **caractérisé en ce que** l'ordinateur enregistre les mesurages sur le disque dur, calcule les déviations par rapport aux mesurages enregistrés les jours précédents, présente les résultats sur l'écran et déclenche un signal acoustique et/ou visuel lorsque les déviations dépassent une limite déterminée.

8. Méthode **caractérisée en ce qu'**elle utilise les appareils et/ou les systèmes selon les revendications 1 à 7 pour prédire ou détecter le moment de la parturition chez les ongulés domestiqués.

9. Méthode **caractérisée en ce qu'**elle utilise les appareils et/ou les systèmes selon les revendications 1 à 7 pour prédire ou détecter les chaleurs chez les ongulés domestiqués.

## Patentansprüche

1. Apparat zum Feststellen der Körpertemperatur von domestizierten Huftieren, welcher eine Sonde enthält, die in die Vagina oder das Rektum des Huftieres eingebracht werden kann, bestehend aus einem unbiegsamen Röhrchen (1), dessen Minimaldiameter bestimmt wird vom Diameter eines durch das Innere des Röhrchens hindurchgehenden Elektrodrahtes (4) und welches an einem seiner Enden mit einer Hülse (3) ausgestattet ist, worin sich ein Sensor für die Temperaturmessung (2) befindet, welcher an den Elektrodraht (4) verbunden ist, **dadurch gekennzeichnet dass** die Sonde eine der Tiergrösse angemessene Länge hat und der Elektrodraht mit einer dünnen Schnur (6), an dem aus der Sonde austretenden Teil, ausgestattet ist.

2. Modifikation des Apparates nach Anspruch 1, darin bestehend, die Sonde (1) beinhalte einen Ring (12), der **dadurch gekennzeichnet** wird, dass ein Band (13) durch den Ring hindurchgeht und dieses Band (13) an einem Gurt (7), den die Huftiere tragen, befestigt werden kann.

3. System, **dadurch gekennzeichnet, dass** ein Apparat für die Temperaturmessung nach Ansprüchen 1 oder 2, mittels eines Elektrodrahtes (4) mit einem mittels Dichtungen und Versiegelungen wasserdicht gemachten Gehäuse (5) verbunden worden ist, wobei das Gehäuse eine Batterie sowie die für die Digitalisierung der Messungen benötigten Elektronik beinhaltet, nebst einem Radiosender, um die Messergebnisse an bestimmten Zeitpunkten mitzuteilen an einen Empfänger.

4. System nach Anspruch 3, **dadurch gekennzeichnet, dass** der Empfänger mit einem Bildschirm oder Drucker verbunden ist.

5. System nach Anspruch 3, **dadurch gekennzeichnet, dass** der Empfänger mit einem Computer verbunden ist.

6. System nach Ansprüchen 3 bis 5, **dadurch gekennzeichnet dass** der Apparat mit dem der Empfänger verbunden ist, ein akustisches und/oder visuelles Signal einschaltet, sollte die Temperatur über einen festgestelten Maximalwert hinaussteigen oder auch unter einen festgesetzten Minimalwert sinken.

7. System nach Ansprüchen 3 und 5, **dadurch gekennzeichnet, dass** der Computer die Resultate auf dem Harddisk speichert, die Abweichungen berechnet gegenüber den an den vorhergehenden Tagen registrierten Werten, die Resultate auf dem Bildschirm anzeigt und ein akustisches und/oder visuelles Signal einschaltet, sollten die Abweichungen eine bestimmte Grenze überschreiten.

8. Methode **dadurch gekennzeichnet, dass** die Apparate und/oder Systeme nach Ansprüchen 1 bis 7 verwendet werden, um den Augenblick des Eintritts der Geburt der domestizierten Huftiere vorherzusagen oder festzustellen.

9. Methode **dadurch gekennzeichnet, dass** die Apparate und/oder Systeme nach Ansprüchen 1 bis 7 verwendet werden, um vorherzusagen oder festzustellen ob die domestizierten Huftiere in der Brunst sind.

## Claims

1. A device to detect body temperature in domesticated ungulates, containing a probe tube wich can be placed in the ungulates' vagina or rectum wich consists of a rigid tube (1), the minimal diameter whereof is determined by the diameter of the electrical wire (4) inside the said tube, and equipped with a socket (3) at one of its extremities containing a sensor (2), connected to the electrical wire (4), to measure the temperature, **characterised by** the probe tube adapted to the animal's size and by a twine (6) that is connected at the electrcal wire to the outgoing part of the tube.

2. Device modifications according to claim 1 are found in the fact that the tube (1) of the probe device contains a ring (12) **characterised by** a twine (13) passing through it, as well as by the fact that the twine (13) can be connected to a belt (7) worn by the ungulate.

3. System **characterized by** the fact that a device for detection of body temperature according to claims 1 and 2, is linked, by means of an eletrical wire (4) to a housing (5), made waterproof by joints and seals, containing a battery and the necessary electronic circuits for measurement digitalisation, as well as a radio transmitter, in order to, at regular intervals, communicate the measurements to a receiver.

4. System according to claim 3, **characterised by** a screen- or printer-linked receiver.

5. System according to claim 3, **characterised by** a computer-linked receiver.

6. System according to claims 3 to 5, **characterised by** a device, to wich the receiver is linked, transmitting an acoustic and/or visual signal, should the temperature exceed a determinated minimal or maximal value.

7. System according to claims 3 and 5, **characterised by** a computer saving the measurements on the hard disk, calculating deviations vis-à-vis the measurement registered the previous days, presenting on-screen the results and activating an acoustic and/or visual signal in case the deviations exceed a determined limit.

8. Method **characterised by** using devices and/or systems according to claims 1 to 7, for prediction or detection of the moment of parturition in domesticated ungulates.

9. Method **characterised by** using devices and/or systems according to claims 1 to 7, for prediction or detection of domesticated ungulates being in heat.
